# EUROPEAN PATENT APPLICATION

(11) **EP 4 822 884 A1**
(43) Date of publication of application: **14.10.2026**
(21) Application number: 24930328.0
(22) Date of filing: 12.08.2024
(51) Int. Cl.: H01M 50/569, H01M 10/48, H01M 10/05, H01M 50/325

(54) **BATTERY, BATTERY CELL, AND ELECTRIC DEVICE**

(30) Priority: 21.03.2024 CN 202420558716 U
(71) Applicant: Contemporary Amperex Technology Co., Limited, Ningde, Fujian 352100 (CN)
(72) Inventor: XU, Liangfan, Ningde, Fujian 352100 (CN); XU, Hu, Ningde, Fujian 352100 (CN); LI, Xing, Ningde, Fujian 352100 (CN); JIA, Jun, Ningde, Fujian 352100 (CN); ZHOU, Wenlin, Ningde, Fujian 352100 (CN); JIN, Haizu, Ningde, Fujian 352100 (CN)
(74) Representative: Kraus & Lederer PartGmbB
(86) International application number: PCT/CN2024/111525
(87) International publication number: WO 2025/194666

(57) **Abstract**

Provided are a battery (1100), a battery cell (10), and an electric device. The battery includes a battery unit (1) and a sampling assembly (2). The battery unit (1) includes a plurality of columns of battery cells (10) arranged along a first direction, and each column of battery cells (10) includes a plurality of battery cells (10) arranged along a second direction; the battery cell (10) is provided with a pressure relief mechanism (12), electrode terminals (13), and a first side wall (1111) in a third direction, and the electrode terminals (13) include a first electrode terminal (131) and a second electrode terminal (132) with different polarities; the first electrode terminal (131), the second electrode terminal (132), and the pressure relief mechanism (12) are spaced apart from each other on the first side wall (1111) along the first direction, and the second electrode terminal (132) is located between the first electrode terminal (131) and the pressure relief mechanism (12); or the first electrode terminal (131) and the second electrode terminal (132) are spaced apart from each other on the first side wall (1111) along the first direction, and the pressure relief mechanism (12) is disposed on another side wall of the battery cell (10), where the first direction intersects with the second direction, and the third direction is perpendicular to the first direction and the second direction. The sampling assembly (2) includes an electric connector (21) and a sampling member (22) configured to be electrically connected to the electric connector (21), the electrode terminals (13) of two adjacent battery cells (10) are connected by the electric connector (21), and the sampling member (22) is disposed between the electrode terminals (13) of every two adjacent columns of battery cells (10).

## Description

The present application claims priority to Chinese Patent Application No. 202420558716.2, filed with the China National Intellectual Property Administration on March 21, 2024, and entitled "BATTERY, BATTERY CELL, AND ELECTRIC DEVICE", which is incorporated herein by reference in its entirety.

### TECHNICAL FIELD

The present application pertains to the field of battery sampling technologies, and in particular, to a battery, a battery cell, and an electric device.

### BACKGROUND

Energy conservation and emission reduction are crucial to the sustainable development of the automobile industry. In this context, electric vehicles have become a core part of the sustainable development of the automobile industry due to their energy-saving and environmentally friendly characteristics. However, for electric vehicles, the battery technology is a key factor affecting their development.

A battery usually includes a plurality of battery cells, and in order to know the operation state of each battery cell, one column of battery cells can be correspondingly connected to one sampling member in a sampling assembly to acquire the operation data of each battery cell. However, the cost of the sampling member is high; in the case where a plurality of columns of battery cells are provided, the number of sampling members is large, resulting in a high manufacturing cost of the battery.

The above statements are only used to provide background information related to the present application and do not necessarily constitute the prior art.

### SUMMARY

The objective of embodiments of the present application is to provide: a battery, a battery cell, and an electric device, including but not limited to solving the problems of a large number of sampling members and a high battery cost in the related art.

The technical solutions adopted in the embodiments of the present application are as follows:
In a first aspect, a battery is provided. The battery includes a battery unit and a sampling assembly. The battery unit includes a plurality of columns of battery cells arranged along a first direction, and each column of battery cells includes a plurality of battery cells arranged along a second direction; the battery cell is provided with a pressure relief mechanism, electrode terminals, and a first side wall in a third direction, and the electrode terminals include a first electrode terminal and a second electrode terminal with different polarities; the first electrode terminal, the second electrode terminal, and the pressure relief mechanism are spaced apart from each other on the first side wall along the first direction, and the second electrode terminal is located between the first electrode terminal and the pressure relief mechanism; or the first electrode terminal and the second electrode terminal are spaced apart from each other on the first side wall along the first direction, and the pressure relief mechanism is disposed on another side wall of the battery cell, where the first direction intersects with the second direction, and the third direction is perpendicular to the first direction and the second direction. The sampling assembly includes an electric connector and a sampling member configured to be electrically connected to the electric connector; the electrode terminals of two adjacent battery cells are connected by the electric connector, and the sampling member is disposed between the electrode terminals of every two adjacent columns of battery cells.

In the battery of the embodiments of the present application, since the second electrode terminal of the battery cell is located between the first electrode terminal and the pressure relief mechanism, or the first electrode terminal and the second electrode terminal are located on the first side wall of the battery cell, and the pressure relief mechanism is located on another side wall of the battery cell, the spacing between the first electrode terminal and the second electrode terminal can be set to be small, thereby reducing the distance between the electric connector and the sampling member and reducing the sampling distance of the sampling member. Therefore, two columns of battery cells can share one sampling member, thereby reducing the number of sampling members and reducing the manufacturing cost of the battery.

In some embodiments, in the same column of battery cells, two adjacent battery cells are respectively a first battery cell and a second battery cell; the second electrode terminal of the first battery cell is disposed opposite to the second electrode terminal of the second battery cell, the first electrode terminal of the first battery cell is located on one side of the second electrode terminal of the first battery cell, and the first electrode terminal of the second battery cell is located on the other side of the second electrode terminal of the first battery cell.

By adopting the technical solution of the embodiments, the second electrode terminal of the first battery cell is disposed opposite to the second electrode terminal of the second battery cell, such that the distance between the electric connector connected to the second electrode terminal and the sampling member is small, which reduces the sampling distance of the sampling member and facilitates the sharing of one sampling member by two adjacent columns of battery cells.

In some embodiments, an end portion, proximal to the sampling member, of the electric connector is connected to the sampling member.

By adopting the technical solution of the embodiments, the wiring distance and the sampling distance between the electric connector and the sampling member can be reduced, thereby reducing the sampling wiring distance and the sampling distance.

In some embodiments, the second electrode terminal is located at a middle position of the first side wall in the first direction.

By adopting the technical solution of the embodiments, the battery unit can adopt the same type of battery cells, which is beneficial to reducing the manufacturing cost.

In some embodiments, in the same column of battery cells, two adjacent battery cells are respectively a first battery cell and a second battery cell; the first electrode terminal of the first battery cell is disposed opposite to the second electrode terminal of the second battery cell, and the second electrode terminal of the first battery cell is disposed opposite to the first electrode terminal of the second battery cell.

By adopting the technical solution of the embodiments, the electrode terminals of the battery cells are arranged in a regular manner, which facilitates the mounting of the electric connector.

In some embodiments, the first electrode terminal and the second electrode terminal are symmetrically disposed with respect to a bisector of the first side wall in the first direction.

By adopting the technical solution of the embodiments, the battery unit can adopt the same type of battery cells, which is beneficial to reducing the manufacturing cost.

In some embodiments, in the same column of battery cells, two adjacent battery cells are respectively a first battery cell and a second battery cell, and the electrode terminals of the first battery cell and the electrode terminals of the second battery cell are disposed proximal to the sampling member; the first electrode terminal of the first battery cell is disposed opposite to the first electrode terminal of the second battery cell, and the second electrode terminal of the second battery cell is disposed opposite to the second electrode terminal of the second battery cell.

By adopting the technical solution of the embodiments, the electrode terminals of the battery cells are arranged in a regular manner, which facilitates the mounting of the electric connector.

In some embodiments, the polarity of the first electrode terminal of the first battery cell is the same as the polarity of the first electrode terminal of the second battery cell; or the polarity of the first electrode terminal of the first battery cell is different from the polarity of the first electrode terminal of the second battery cell.

By adopting the technical solution of the embodiments, for battery cells, different battery cells can be flexibly selected to facilitate the connection of the electric connector and reduce the manufacturing cost of the battery.

In some embodiments, the first side wall is provided with a first side edge and a second side edge spaced apart from each other along the first direction, and the first electrode terminal is located between the second electrode terminal and the first side edge; a spacing between the first side edge and the second side edge is L, and a distance between the second electrode terminal and the first side edge is L₁, where 0.2 ≤ L₁/L ≤ 0.5.

By adopting the technical solution of the embodiments, it is beneficial to reducing the sampling distance, and the risk of short circuits of the battery cell can also be reduced.

In some embodiments, 0.35 ≤ L₁/L ≤ 0.45.

By adopting the technical solution of the embodiments, the sampling distance can be better reduced, and the risk of short circuits of the battery cell can also be better reduced.

In some embodiments, the pressure relief mechanism is disposed on the first side wall, and the second electrode terminal is located between the first electrode terminal and the pressure relief mechanism; the first side wall is provided with a first side edge and a second side edge spaced apart from each other along the first direction, and the first electrode terminal is located between the second electrode terminal and the first side edge; a spacing between the first side edge and the second side edge is L, and a distance between the second electrode terminal and the pressure relief mechanism is L₂, where 0.5 ≤ L₂/L ≤ 2/3.

By adopting the technical solution of the embodiments, the risk of electrical bridging and conduction between the electric connector and the first side wall can be reduced, and the risk of short circuits of the battery cell can also be reduced, which is beneficial to improving the use reliability of the battery.

In some embodiments, 0.55 ≤ L₂/L ≤ 0.65.

By adopting the technical solution of the embodiments, the risk of electrical bridging and conduction between the electric connector and the first side wall can be better reduced, and the risk of short circuits of the battery cell can also be better reduced, which is beneficial to improving the use reliability of the battery.

In some embodiments, the pressure relief mechanism is disposed on the first side wall, and the second electrode terminal is located between the first electrode terminal and the pressure relief mechanism. In the same column of battery cells, the pressure relief mechanisms of the battery cells are disposed in a staggered manner.

By adopting the technical solution of the embodiments, the pressure relief mechanisms are disposed in a staggered manner, and the spacing between the pressure relief mechanisms of two adjacent battery cells can be increased. In this way, it can reduce the impact of high-temperature shock and ejected particulate matter after the pressure relief mechanism is opened on the pressure relief mechanisms of adjacent battery cells, and reduce the risk of melting through the pressure relief mechanisms of the adjacent battery cells, which is beneficial to improving the use reliability of the battery cells.

In some embodiments, the plurality of battery cells are connected in series through the electric connector.

By adopting the technical solution of the embodiments, the battery cells are connected in series, and the electrical connection operation between the battery cells is simple, which is beneficial to reducing the manufacturing cost of the battery cells.

In some embodiments, the sampling member extends in the second direction.

By adopting the technical solution of the embodiments, the sampling member and the battery cells in two adjacent columns of battery cells may be correspondingly disposed, which is beneficial to reducing the connection distance between the electric connector and the sampling member.

In some embodiments, the sampling member includes at least one of a flexible printed circuit and a rigid printed circuit board.

By adopting the technical solution of the embodiments, different types of sampling members may be selected according to the actual situation, such that the arrangement of the sampling members is more flexible, with better practicability.

In some embodiments, the battery cell is provided with a second side wall disposed opposite to the first side wall, and the second side wall is provided with the pressure relief mechanism.

By adopting the technical solution of the embodiments, the pressure relief mechanism is disposed on the second side wall, such that when the pressure relief mechanism on the second side wall opens, the ejected particulate matter is unlikely to come into contact with the electric connector, the electrode terminal, and the sampling member, thereby reducing the risk of damage to the electric connector, the electrode terminal, and the sampling member, which is beneficial to improving the use reliability of the battery.

In some embodiments, the battery cell is provided with a temperature sensor for acquiring temperature information, and the temperature sensor is connected to the sampling member.

By adopting the technical solution of the embodiments, the sampling member cooperates with the temperature sensor, and a temperature signal of the battery cell can also be acquired, such that the operation state of the battery cell is monitored more comprehensively, which is beneficial to improving the use reliability of the battery.

In a second aspect, a battery cell is provided. The battery cell includes a housing and an electrode assembly. The housing is provided with a first side wall, and the first side wall is provided with a pressure relief mechanism, as well as a first electrode terminal and a second electrode terminal with different polarities; the second electrode terminal is located between the first electrode terminal and the pressure relief mechanism. The electrode assembly is located in the housing, and the first electrode terminal and the second electrode terminal are electrically connected to the electrode assembly to realize the input and output of electric energy.

In the battery cell of the embodiments of the present application, the second electrode terminal is located between the pressure relief mechanism and the first electrode terminal, such that the spacing between the first electrode terminal and the second electrode terminal can be set to be small to facilitate the sharing of one sampling member by two adjacent columns of battery cells, thereby reducing the manufacturing cost of the battery.

In a third aspect, an electric device is provided. The electric device includes the battery according to the above embodiments and/or the battery cell according to the above embodiments.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in embodiments of the present application, the drawings required for illustrating the embodiments or description of the prior art are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to some embodiments of the present application;
FIG. 2 is a schematic exploded diagram of a battery according to some embodiments of the present application;
FIG. 3 is a schematic structural diagram of a battery according to some other embodiments of the present application;
FIG. 4 is a schematic structural diagram of a battery cell in FIG. 3;
FIG. 5 is a schematic structural diagram of a battery cell according to some embodiments of the present application;
FIG. 6 is a schematic exploded diagram of the battery cell in FIG. 5;
FIG. 7 is a schematic structural diagram of a battery according to yet some other embodiments of the present application;
FIG. 8 is a schematic structural diagram of a battery cell in FIG. 7;
FIG. 9 is a schematic structural diagram of a battery according to yet some other embodiments of the present application;
FIG. 10 is a schematic structural diagram of a battery cell in FIG. 9;
FIG. 11 is a schematic structural diagram of a battery according to yet some other embodiments of the present application;
FIG. 12 is a schematic structural diagram of a battery cell in FIG. 11; and
FIG. 13 is a schematic structural diagram of a battery according to yet some other embodiments of the present application.

Reference numerals in the drawings have the following meanings:
1000: vehicle; 1100: battery; 1200: controller; 1300: motor; 1: battery unit; 10: battery cell; 10a: first battery cell; 10b: second battery cell; 11: housing; 111: end cover; 1111: first side wall; 11111: first side edge; 11112: second side edge; 112: housing body; 1121: second side wall; 12: pressure relief mechanism; 13: electrode terminal; 131: first electrode terminal; 132: second electrode terminal; 14: electrode assembly; 141: tab; 15: temperature sensor; 2: sampling assembly; 21: electric connector; 22: sampling member; 3: case; 31: first portion; 32: second portion; 4: battery management module.

### DETAILED DESCRIPTION

In order to make the technical problems to be addressed, the technical solutions, and the beneficial effects of the present application more apparent, the present application is further described in detail below with reference to the drawings and embodiments. It should be understood that the specific embodiments described herein are merely illustrative of the present application and do not limit the present application.

Unless otherwise defined, all technical and scientific terms used herein have the same meanings as commonly understood by those skilled in the technical field to which the present application belongs. The terms used herein are only used to illustrate the specific embodiments, rather than limit the present application. The terms "include", "comprise", "have", "provided with", and any variants thereof, in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. Therefore, a feature defined with "first" or "second" may explicitly or implicitly include one or more such features.

Reference in the present application to "embodiment" means that a particular feature, structure, or characteristic described in combination with the embodiment may be included in at least some embodiments of the present application. The appearances of the word in various places of the specification do not necessarily all refer to the same embodiment, nor does the word refer to independent or alternative embodiments mutually exclusive of other embodiments. It will be explicitly and implicitly appreciated by those skilled in the art that the embodiments described herein may be combined with other embodiments in any suitable manner.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces. The meaning of "several" is one or more, unless otherwise specifically defined.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

In the description of the embodiments of the present application, unless otherwise clearly specified and defined, when an element is referred to as being "fixed to" or "disposed on" another element, it may be directly on or indirectly on the other element. When an element is referred to as being "connected to" another element, it may be directly connected to the other element or indirectly connected to the other element.

At present, judging from the trends of the market situation, the application of batteries is becoming increasingly widespread. Batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing.

Energy conservation and emission reduction are crucial to the sustainable development of the automobile industry. In this context, electric vehicles have become a core part of the sustainable development of the automobile industry due to their energy-saving and environmentally friendly characteristics. However, for electric vehicles, the battery technology is a key factor affecting their development.

A battery generally includes a sampling assembly and a plurality of battery cells. A side wall of the battery cell is provided with a first electrode terminal, a second electrode terminal, and a pressure relief mechanism. The first electrode terminal and the second electrode terminal are configured to be electrically connected to an electric connector in the sampling assembly to realize an electrical connection between the plurality of battery cells; the pressure relief mechanism is configured to release the pressure inside the battery cell to improve the use reliability of the battery. However, the pressure relief mechanism is disposed between the first electrode terminal and the second electrode terminal, resulting in a large spacing between the first electrode terminal and the second electrode terminal.

In order to know the operation state of each battery cell, a sampling member of the sampling assembly is usually electrically connected to the electric connector to acquire the electric signal of each battery cell. Generally, one column of battery cells is correspondingly connected to one sampling member. This is mainly because the spacing between the first electrode terminal and the second electrode terminal is large, and if two columns of battery cells share one sampling member, the distance between the sampling member and the electric connector is large, resulting in a long sampling distance of the sampling member.

However, the cost of the sampling member is high, and in the case where a plurality of columns of battery cells are provided, a large number of sampling members need to be provided, resulting in a high cost of the battery.

Based on the above considerations, in order to reduce the manufacturing cost of the battery, the embodiments of the present application provide a battery. The battery includes a battery unit and a sampling assembly; the battery unit includes a plurality of columns of battery cells arranged along a first direction, and each column of battery cells includes a plurality of battery cells arranged along a second direction; the battery cell is provided with a pressure relief mechanism, electrode terminals, and a first side wall in a third direction, and the electrode terminals include a first electrode terminal and a second electrode terminal with different polarities; the first electrode terminal, the second electrode terminal, and the pressure relief mechanism are spaced apart from each other on the first side wall along the first direction, and the second electrode terminal is located between the first electrode terminal and the pressure relief mechanism; or the first electrode terminal and the second electrode terminal are spaced apart from each other on the first side wall along the first direction, and the pressure relief mechanism is disposed on another side wall of the battery cell, where the first direction intersects with the second direction, and the third direction is perpendicular to the first direction and the second direction. The sampling assembly includes an electric connector and a sampling member configured to be electrically connected to the electric connector; the electrode terminals of two adjacent battery cells are connected by the electric connector, and the sampling member is disposed between the electrode terminals of every two adjacent columns of battery cells.

In the battery of the embodiments of the present application, since the second electrode terminal of the battery cell is located between the first electrode terminal and the pressure relief mechanism, or the first electrode terminal and the second electrode terminal are located on the first side wall of the battery cell, and the pressure relief mechanism is located on another side wall of the battery cell, the spacing between the first electrode terminal and the second electrode terminal can be set to be small, thereby reducing the distance between the electric connector and the sampling member and reducing the sampling distance of the sampling member. Therefore, two columns of battery cells can share one sampling member, reducing the number of sampling members and reducing the manufacturing cost of the battery.

The battery of the embodiments of the present application can be widely used in various electronic devices, including mobile phones, laptop computers, electric bicycles, electric vehicles, electric airplanes, electric ships, electric toy cars, electric toy ships, electric toy airplanes, and electric tools. The battery is a device capable of storing and releasing electric energy to provide the required power for these electronic devices.

The electric device provided in the embodiments of the present application may use the battery in the embodiments of the present application. The battery provides electric energy for the electric device, and the cost of the battery is low, such that the manufacturing cost of the electric device can also be reduced.

The electric device in the embodiments of the present application may be, but is not limited to, a vehicle, a mobile phone, a portable device, a laptop computer, a ship, a spacecraft, an electric toy, or an electric tool. The spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric device may also be an energy storage device, for example, an energy storage container or an energy storage electrical cabinet.

For ease of description, the following embodiments are illustrated by taking a vehicle as an example of the electric device according to the embodiments of the present application.

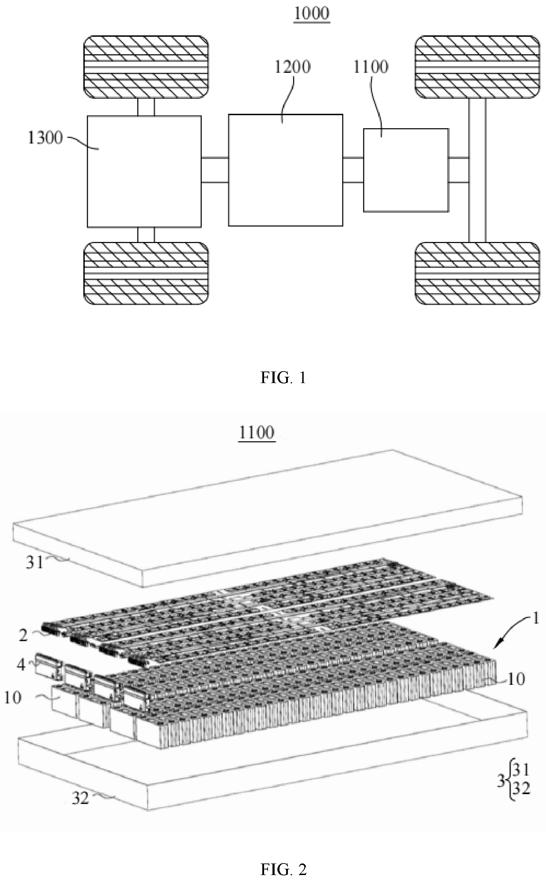

Referring to FIG. 1, the vehicle 1000 may be a fuel vehicle, a gas vehicle, or a new energy vehicle. The new energy vehicle may be a pure electric vehicle, a hybrid vehicle, an extended-range vehicle, or the like. A battery 1100 is arranged inside the vehicle 1000, and the battery 1100 may be arranged at the bottom, head, or tail of the vehicle 1000. The battery 1100 may be configured to power the vehicle 1000. For example, the battery 1100 may serve as an operation power source of the vehicle 1000. The vehicle 1000 may further include a controller 1200 and a motor 1300. The controller 1200 is configured to control the battery 1100 to power the motor 1300, e.g., for the operation power needed by the vehicle 1000 for start-up, navigation, and driving.

In some embodiments of the present application, the battery 1100 may not only serve as an operation power source of the vehicle 1000, but also as a driving power source of the vehicle 1000 to, replacing or partially replacing fuel or natural gas, provide driving power for the vehicle 1000.

Referring to FIG. 2, the battery 1100 includes a case 3 and a battery unit 1. The battery unit 1 is accommodated in the case 3. The case 3 is configured to provide an accommodating space for the battery unit 1, and the case 3 may be of various structures. In some embodiments, the case 3 may include a first portion 31 and a second portion 32. The first portion 31 and the second portion 32 cover and engage with each other, and the first portion 31 and the second portion 32 jointly define the accommodating space for accommodating the battery unit 1. The second portion 32 may be of a hollow structure with one end open, and the first portion 31 may be of a plate-shaped structure. The first portion 31 covers and engages with an open side of the second portion 32, such that the first portion 31 and the second portion 32 jointly define the accommodating space. The first portion 31 and the second portion 32 may also both be of a hollow structure with one side open, and the open side of the first portion 31 covers and engages with the open side of the second portion 32. Certainly, the case 3 formed by the first portion 31 and the second portion 32 may be in various shapes, such as a cylinder and a rectangular parallelepiped.

In some embodiments, one or a plurality of battery units 1 may be provided, and the plurality of battery units 1 may be directly connected in series, in parallel, or in series-parallel and then placed in the case 3, where the series-parallel connection means that both series connection and parallel connection are present for the connection among the plurality of battery cells 10.

In some embodiments, the battery unit 1 includes a plurality of battery cells 10. The plurality of battery cells 10 may be directly connected in series, in parallel, or in series-parallel, and then the whole formed by the plurality of battery cells 10 is accommodated in the case 3. Certainly, the situation may also be that in the battery 1100, the plurality of battery cells 10 are first connected in series, in parallel, or in series-parallel to form battery 1100 modules, and then the plurality of battery 1100 modules are connected in series, in parallel, or in series-parallel to form a whole and accommodated in the case 3.

Each battery cell 10 may be a secondary battery 1100 or a primary battery 1100; it may also be a lithium-sulfur battery 1100, a sodium-ion battery 1100, or a magnesium-ion battery 1100, but is not limited thereto. The battery cell 10 may be cylindrical, flat, rectangular parallelepiped-shaped, or in other shapes.

In some embodiments, the battery 1100 further includes a sampling assembly 2, and the sampling assembly 2 is disposed in the case 3. The battery unit 1 includes a plurality of battery cells 10, and the sampling assembly 2 can connect the plurality of battery cells 10 in series, in parallel, or in series-parallel, and can also acquire voltage information, current information, temperature information, and the like of each battery cell 10, so as to monitor the working state of each battery cell 10 and improve the use reliability of the battery 1100.

In some embodiments, the battery 1100 further includes a battery management module 4 (e.g., a battery management system (BMS)). The battery management module 4 is disposed in the case 3, and the battery management module 4 may be electrically connected to the sampling assembly 2, such that the battery management module 4 can collect information, such as voltage information, current information, and temperature information, collected by the sampling assembly 2 to realize the monitoring of the battery 1100. The battery management module 4 may also perform thermal management and/or safety management on the battery cells 10.

In some embodiments, the battery 1100 may not include the case 3; instead, the plurality of battery cells 10 may be electrically connected, formed into a whole by means of a necessary fixing structure, and then assembled into the electric device.

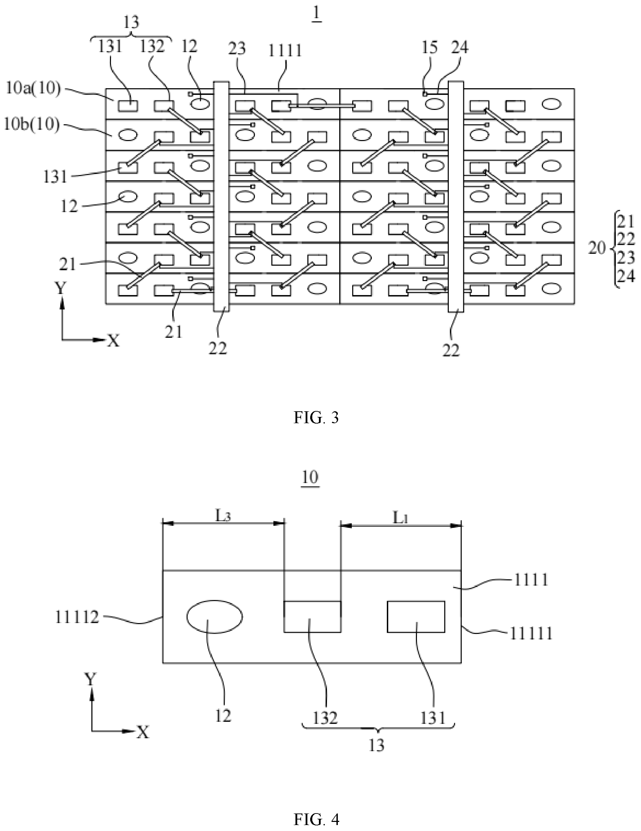

Referring to FIGs. 3 to 13, schematic diagrams of a battery 1100 and a battery cell 10 according to the embodiments of the present application are shown representatively. In the following exemplary embodiments, an example in which the plurality of battery cells 10 in the battery 1100 according to the embodiments of the present application are in series is illustrated. It will be readily understood by those skilled in the art that the related designs of the battery 1100 and the battery cell 10 according to the embodiments of the present application may also be applied to a battery 1100 in which a plurality of battery cells 10 in the battery 1100 are in parallel or in series-parallel. In addition, various modifications, additions, substitutions, deletions, or other changes can be made to the following embodiments, and these changes are still within the principle scope of the battery 1100 according to the embodiments of the present application.

For ease of understanding and description, only a rectangular parallelepiped battery cell 10 is illustrated in the embodiments according to the present application. It should be understood that the embodiments according to the present application are also applicable to a cylinder battery cell 10 or a pouch battery cell 10. This is not limited in the embodiments of the present application.

Referring to FIGs. 3 to 6, in some embodiments of the present application, a battery 1100 is provided. The battery 1100 includes a battery unit 1 and a sampling assembly 2. The battery unit 1 includes a plurality of columns of battery cells 10 arranged along a first direction, and each column of battery cells 10 includes a plurality of battery cells 10 arranged along a second direction; the battery cell 10 is provided with a pressure relief mechanism 12, electrode terminals 13, and a first side wall 1111 in a third direction, and the electrode terminals 13 include a first electrode terminal 131 and a second electrode terminal 132 with different polarities; the first electrode terminal 131, the second electrode terminal 132, and the pressure relief mechanism 12 are spaced apart from each other on the first side wall 1111 along the first direction, and the second electrode terminal 132 is located between the first electrode terminal 131 and the pressure relief mechanism 12; or the first electrode terminal 131 and the second electrode terminal 132 are spaced apart from each other on the first side wall 1111 along the first direction, and the pressure relief mechanism 12 is disposed on another side wall of the battery cell 10, where the first direction intersects with the second direction, and the third direction is perpendicular to the first direction and the second direction. The sampling assembly 2 includes an electric connector 21 and a sampling member 22 configured to be electrically connected to the electric connector 21; the electrode terminals 13 of two adjacent battery cells 10 are connected by the electric connector 21, and the sampling member 22 is disposed between the electrode terminals 13 of every two adjacent columns of battery cells 10.

The battery unit 1 may refer to a component composed of a plurality of battery cells 10. The plurality of battery cells 10 are arranged along the first direction and the second direction; the battery cells 10 arranged along the first direction form a row of battery cells 10, and the battery cells 10 arranged along the second direction form a column of battery cells 10, where the battery unit 1 includes a plurality of rows and a plurality of columns of battery cells 10. The first direction may refer to an extension direction of one side of the battery cell 10; the first direction is not parallel to the second direction, for example, the angle between the first direction and the second direction may be an acute angle or a right angle. The third direction may refer to a direction perpendicular to the first direction and the second direction.

Exemplarily, the first direction may refer to the length direction X of the battery cell 10, the second direction may refer to the width direction Y of the battery cell 10, and the third direction may refer to the height direction Z of the battery cell 10.

The battery cell 10 may refer to the smallest unit forming the battery unit 1; the battery cell 10 includes an electrode assembly 14 and a housing 11, and the electrode assembly 14 is mounted in the housing 11 to protect the electrode assembly 14 by means of the housing 11.

Exemplarily, the electrode assembly 14 is composed of a positive electrode plate, a negative electrode plate, and a separator. The electrode assembly 14 primarily works by the movement of metal ions between the positive electrode plate and the negative electrode plate. The positive electrode plate includes a positive electrode current collector and a positive electrode active substance layer, and the positive electrode active substance layer is applied on the surface of the positive electrode current collector. The portion of the positive electrode current collector that is not coated with the positive electrode active substance layer protrudes from the portion of the positive electrode current collector that is coated with the positive electrode active substance layer; the portion that is not coated with the positive electrode active substance layer serves as a positive electrode tab, or a metal conductor is welded to the positive electrode current collector and led out to serve as the positive electrode tab.

Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer, and the negative electrode active substance layer is applied on the surface of the negative electrode current collector. The portion of the negative electrode current collector that is not coated with the negative electrode active substance layer protrudes from the portion of the negative electrode current collector that is coated with the negative electrode active substance layer; the portion that is not coated with the negative electrode active substance layer serves as a negative electrode tab, or a metal conductor is welded to the negative electrode current collector and led out to serve as the negative electrode tab. The material of the negative electrode current collector may be copper, and the negative electrode active substance may be carbon, silicon, or the like.

To ensure, to a certain extent, the passing of a large current without fusing, there are a plurality of positive electrode tabs that are stacked together, and there are a plurality of negative electrode tabs that are stacked together. It can be understood that in the electrode assembly 14, there may be one positive electrode tab, and there may also be one negative electrode tab. That is, the electrode assembly 14 is provided with two groups of tabs 141, and each group includes at least one tab 141; additionally, one group of tabs 141 is positive electrode tabs, and the other group of tabs 141 is negative electrode tabs.

The electrode assembly 14 may be of a wound structure or a stacked structure. The embodiments of the present application are not limited thereto. For a wound structure, generally, tabs 141 are welded to current collectors, and components are then arranged in the sequence of positive electrode plate-separator-negative electrode plate-separator, and then winding is performed to obtain a cylindrical or prismatic cell. For a stacked structure, generally, tabs 141 are led out from current collectors, and the positive electrode plate, the negative electrode plate, and the separator are arranged in the sequence of positive electrode plate-separator-negative electrode plate-separator, and are stacked layer by layer to form a stacked cell, where the separator may be cut into separator pieces for direct stacking, or the separator may be folded in a Z-shape without being cut. The material of the separator may be polypropylene (PP), polyethylene (PE), or the like. The separator is an insulating film arranged between the positive electrode plate and the negative electrode plate, and its main function is to isolate the positive electrode and the negative electrode and prevent electrons in the battery cell 10 from passing freely, so as to prevent short circuits to a certain extent, thus enabling ions in the electrolyte to pass freely between the positive electrode and the negative electrode to form a circuit between the positive electrode and the negative electrode. The positive electrode plate and the negative electrode plate are collectively referred to as electrode plates. The positive electrode tab and the negative electrode tab are collectively referred to as tabs 141.

The housing 11 refers to a housing body 112 structure having a space therein to accommodate and protect the electrode assembly 14. The housing 11 may be made of a material with a certain hardness and strength, such that the housing 11 is not prone to deformation when being compressed and collided, thereby enabling the battery cell 10 to have higher structural strength and improved reliability. The housing 11 may be made of various materials, including, but not limited to, copper, iron, aluminum, stainless steel, aluminum alloy, and plastic.

The first side wall 1111 may refer to one of two side walls of the housing 11 spaced apart from each other along the third direction. Exemplarily, the first side wall 1111 is parallel to the first direction and the second direction, such that the plurality of battery cells 10 are arranged along the first direction and the second direction, and the first side wall 1111 is exposed on the outside of the battery unit 1, so as to facilitate the electrical connection between the electrode terminal 13 of the battery cell 10 and the electric connector 21.

The electrode terminal 13 refers to a conductive member disposed on the first side wall 1111, and the electrode terminal 13 is connected to the tabs 141 of the electrode assembly 14 to output electric energy of the battery cell 10 or charge the battery cell 10. The battery cell 10 is generally provided with two electrode terminals 13, and the two electrode terminals 13 are respectively connected to the positive and negative electrode tabs of the electrode assembly 14. The electrode terminal 13 connected to the positive electrode tab is a positive electrode terminal, and the electrode terminal 13 connected to the negative electrode tab is a negative electrode terminal. That is, one of the first electrode terminal 131 and the second electrode terminal 132 is a positive electrode terminal, and the other is a negative electrode terminal.

The pressure relief mechanism 12 may refer to a component capable of releasing the gas or liquid inside the battery cell 10 to reduce the internal pressure of the battery cell 10, and the pressure relief mechanism 12 may be, but is not limited to, an anti-explosion valve or an anti-explosion sheet. In the case where the battery cell 10 is subjected to overheating or overvoltage during charging or use, the pressure relief mechanism 12 opens to release the pressure inside the battery cell 10 to reduce the risk of explosion of the battery cell 10. In this way, the safety performance of the battery cell 10 can be improved, and potential safety risks can be reduced.

The first electrode terminal 131, the second electrode terminal 132, and the pressure relief mechanism 12 are spaced apart from each other on the first side wall 1111 along the first direction, and the second electrode terminal 132 is located between the first electrode terminal 131 and the pressure relief mechanism 12. It can be understood that the pressure relief mechanism 12 and the electrode terminal 13 are disposed on the same side wall of the battery cell 10, the pressure relief mechanism 12 is located on one side of the electrode terminal 13, and the second electrode terminal 132 is closer to the pressure relief mechanism 12. The first electrode terminal 131, the second electrode terminal 132, and the pressure relief mechanism 12 are spaced apart from each other along the first direction, such that gaps exist among the first electrode terminal, the second electrode terminal, and the pressure relief mechanism, which can reduce mutual interference among the components and can also reduce the risk of short circuits.

The first electrode terminal 131 and the second electrode terminal 132 are spaced apart from each other on the first side wall 1111 along the first direction, and the pressure relief mechanism 12 is located on another side wall of the battery cell 10. It can be understood that the electrode terminal 13 and the pressure relief mechanism 12 are located on different side walls of the battery cell 10, and the first electrode terminal 131 and the second electrode terminal 132 are spaced apart from each other along the first direction, such that a gap exists between the first electrode terminal 131 and the second electrode terminal 132, which can reduce the risk of short circuits.

The sampling assembly 2 may refer to a component configured to realize the electrical connection between the battery cells 10 and collect the data of the battery cells 10. The sampling assembly 2 includes an electric connector 21 and a sampling member 22; the electric connector 21 may refer to a component for electrically connecting the electrode terminals 13 of two adjacent battery cells 10, and the electric connector 21 has electrical conductivity to meet the electrical connection requirements of the battery cells 10, such as a busbar. The electric connector 21 may completely cover the first electrode terminal 131 connected to the electric connector, or may cover a portion of the first electrode terminal 131 connected to the electric connector. Similarly, the electric connector 21 may completely cover the second electrode terminal 132 connected to the electric connector, or may cover a portion of the second electrode terminal 132 connected to the electric connector. For ease of illustration, in the drawings, the electric connector 21 covers a portion of the first electrode terminal 131 connected to the electric connector, and the electric connector 21 covers a portion of the second electrode terminal 132 connected to the electric connector.

Exemplarily, in the case where the polarities of the first electrode terminals 131 in two adjacent battery cells 10 are the same, the two first electrode terminals 131 are respectively connected to two ends of the electric connector 21, and the two second electrode terminals 132 are respectively connected to two ends of the electric connector 21, such that the parallel connection between the two adjacent battery cells 10 can be realized.

Exemplarily, in the case where the polarities of the first electrode terminals 131 in two adjacent battery cells 10 are the same, the first electrode terminal 131 of one of the two adjacent battery cells 10 and the second electrode terminal 132 of the other battery cell 10 are connected to the two ends of the electric connector 21, such that the series connection between the two adjacent battery cells 10 can be realized. In this way, after the battery cells 10 are electrically connected in sequence, the foremost and rearmost electrode terminals 13 are respectively a total negative and a total positive of the battery unit 1.

The sampling member 22 may refer to a component capable of acquiring the electrical information of the battery cell 10, and the sampling member 22 is electrically connected to the electric connector 21, such that the electrical information of the battery cell 10 is transmitted to the sampling member 22 to realize the sampling of the sampling member 22. The sampling member 22 may refer to a component such as a flexible printed circuit (FPC), a rigid printed circuit board (PCB), or a wire. The sampling member 22 and the electric connector 21 may be electrically connected by a first conductive component 23, where the first conductive component 23 may be, but is not limited to, a wire or a conductive sheet.

The sampling member 22 is disposed between electrode terminals 13 of every two adjacent columns of battery cells 10. It can be understood that in the plurality of columns of battery cells 10, two adjacent columns of battery cells 10 form one battery 1100 group, and two adjacent battery 1100 groups do not include the same column of battery cells 10; that is, two adjacent battery 1100 groups include four columns of battery cells 10. Each battery 1100 group is correspondingly provided with one sampling member 22, and the two opposite sides of the sampling member 22 respectively cover the side portions, which are close to each other, of the first side walls 1111 of two adjacent columns of battery cells 10; certainly, the sampling member 22 may also cover the side portion of the first side wall 1111 of one column of battery cells 10.

In the battery 1100 of the embodiments of the present application, since the second electrode terminal 132 of the battery cell 10 is located between the first electrode terminal 131 and the pressure relief mechanism 12, or the first electrode terminal 131 and the second electrode terminal 132 are located on the first side wall 1111 of the battery cell 10, and the pressure relief mechanism 12 is located on another side wall of the battery cell 10, the spacing between the first electrode terminal 131 and the second electrode terminal 132 can be set to be small, thereby reducing the distance between the electric connector 21 and the sampling member 22 and reducing the sampling distance of the sampling member 22. Therefore, two columns of battery cells 10 can share one sampling member 22, thereby reducing the number of sampling members 22 and reducing the manufacturing cost of the battery 1100.

In some cases, the dimension of the battery cell 10 in the first direction (referring to the length of the battery cell 10) is much larger than the dimension of the battery cell 10 in the second direction (referring to the width of the battery cell 10), such that the number of rows in which the battery cells 10 are arranged is much larger than the number of columns of the battery cells 10. In the battery 1100 of the embodiments of the present application, the sampling member 22 is connected to two adjacent columns of battery cells 10, instead of being connected to two adjacent rows of battery cells. In this way, the number of sampling members 22 can also be reduced, and the manufacturing cost of the battery 1100 is reduced.

In some other embodiments of the present application, referring to FIG. 3, in the same column of battery cells 10, two adjacent battery cells 10 are respectively a first battery cell 10a and a second battery cell 10b; the second electrode terminal 132 of the first battery cell 10a is disposed opposite to the second electrode terminal 132 of the second battery cell 10b, the first electrode terminal 131 of the first battery cell 10a is located on one side of the second electrode terminal 132 of the first battery cell 10a, and the first electrode terminal 131 of the second battery cell 10b is located on the other side of the second electrode terminal 132 of the first battery cell 10a.

In the same column of battery cells 10, one of two adjacent battery cells 10 is the first battery cell 10a, and the other is the second battery cell 10b. The second electrode terminal 132 of the first battery cell 10a and the second electrode terminal 132 of the second battery cell 10b are arranged along the second direction, and the first electrode terminal 131 of the first battery cell 10a and the first electrode terminal 131 of the second battery cell 10b are located on two opposite sides of the second electrode terminal 132 of the first battery cell 10a in the first direction.

In the case where the plurality of battery cells 10 are connected in series, in the second direction, the first electrode terminal 131 of the second battery cell 10b is disposed proximal to the sampling member 22; the second electrode terminal 132 of the former first battery cell 10a and the first electrode terminal 131 of the second battery cell 10b are respectively connected to the two ends of an electric connector 21, and the first electrode terminal 131 of the latter first battery cell 10a and the second electrode terminal 132 of the second battery cell 10b are respectively connected to the two ends of an electric connector 21. In the two electric connectors 21, the sampling distance between the former electric connector 21 and the sampling member 22 may be equal to the distance between the first electrode terminal 131 of the second battery cell 10b and the sampling member 22, and the sampling distance between the latter electric connector 21 and the sampling member 22 is equal to the distance between the second electrode terminal 132 of the second battery cell 10b and the sampling member 22. In addition, the first electrode terminal 131 of the second battery cell 10b is disposed proximal to the sampling member 22, such that the maximum sampling distance of the sampling member 22 may be equal to the distance between the second electrode terminal 132 of the second battery cell 10b and the sampling member 22, and the second electrode terminal 132 is located between the first electrode terminals 131 of two adjacent battery cells 10, thereby reducing the sampling distance of the sampling member 22.

By adopting the technical solution of the embodiments, the second electrode terminal 132 of the first battery cell 10a is disposed opposite to the second electrode terminal 132 of the second battery cell 10b, such that the distance between the electric connector 21 connected to the second electrode terminal 132 and the sampling member 22 is small, which reduces the sampling distance of the sampling member 22 and facilitates the sharing of one sampling member 22 by two adjacent columns of battery cells 10.

In some other embodiments of the present application, referring to FIG. 3, an end portion, close to the sampling member 22, of the electric connector 21 is connected to the sampling member 22.

It can be understood that the end portion, closest to the sampling member 22, of the electric connector 21 is connected to the sampling member 22.

By adopting the technical solution of the embodiments, the wiring distance and the sampling distance between the electric connector 21 and the sampling member 22 can be reduced, thereby reducing the sampling wiring distance and the sampling distance.

In some other embodiments of the present application, referring to FIG. 4, the second electrode terminal 132 is located at a middle position of the first side wall 1111 in the first direction.

It can be understood that one of the two side edges of the first side wall 1111, oppositely distributed in the first direction, is a first side edge 11111, and the other side edge is a second side edge 11112. The first side edge 11111 is located on a side, facing away from the first electrode terminal 131, of the second electrode terminal 132; the distance L₁ between the second electrode terminal 132 and the first side edge 11111 is equal to or approximately equal to the distance L₃ between the second electrode terminal 132 and the second side edge 11112; in this way, when the battery cell 10 is flipped over by 180°, the second electrode terminal 132 is still located in the middle position. Therefore, the first battery cell 10a and the second battery cell 10b can adopt the same type of battery cells 10, and by flipping over one battery cell 10 of two adjacent battery cells 10, the first battery cell 10a and the second battery cell 10b can be obtained.

By adopting the technical solution of the embodiments, the battery unit 1 can adopt the same type of battery cells 10, which is beneficial to reducing the manufacturing cost.

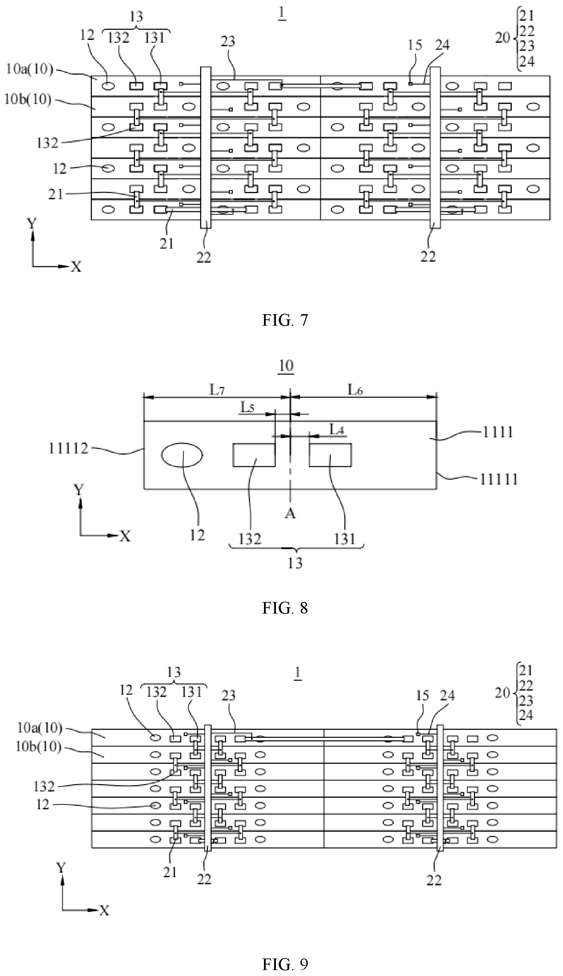

In some other embodiments of the present application, referring to FIGs. 7 and 8, in the same column of battery cells 10, two adjacent battery cells 10 are respectively a first battery cell 10a and a second battery cell 10b; the first electrode terminal 131 of the first battery cell 10a is disposed opposite to the second electrode terminal 132 of the second battery cell 10b, and the second electrode terminal 132 of the first battery cell 10a is disposed opposite to the first electrode terminal 131 of the second battery cell 10b.

It can be understood that the first electrode terminal 131 of the first battery cell 10a and the second electrode terminal 132 of the second battery cell 10b are arranged along the second direction, and the second electrode terminal 132 of the first battery cell 10a and the first battery 1100 terminal of the second battery cell 10b are arranged along the second direction.

By adopting the technical solution of the embodiments, the electrode terminals 13 of the battery cells 10 are arranged in a regular manner, which facilitates the mounting of the electric connector 21.

In some other embodiments of the present application, referring to FIG. 8, the first electrode terminal 131 and the second electrode terminal 132 are symmetrically disposed with respect to the bisector A of the first side wall 1111 in the first direction.

It can be understood that the distance L₄ between the first electrode terminal 131 and the bisector A is equal to the distance L₅ between the second electrode terminal 132 and the bisector A, where the distance L₆ between the bisector A and the first side edge 11111 is equal to the distance L₇ between the bisector A and the second side edge 11112, and the bisector A is perpendicular to the first direction. In this way, when the battery cell 10 is flipped over by 180°, the positions of the first terminal and the second electrode terminal 132 of the battery cell 10 are interchanged, such that the first battery cell 10a and the second battery cell 10b can adopt the same type of battery cells 10, and only one battery cell 10 of two adjacent battery cells 10 needs to be flipped over by 180° to obtain the first battery cell 10a and the second battery cell 10b.

By adopting the technical solution of the embodiments, the battery unit 1 can adopt the same type of battery cells 10, which is beneficial to reducing the manufacturing cost.

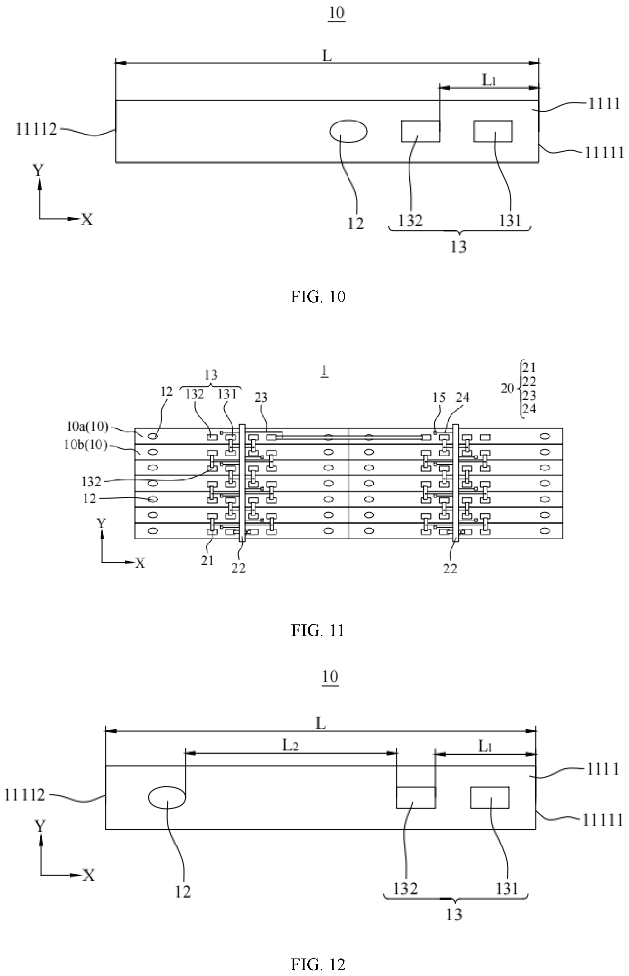

In some other embodiments of the present application, referring to FIGs. 9 and 10, in the same column of battery cells 10, two adjacent battery cells 10 are respectively a first battery cell 10a and a second battery cell 10b, and the electrode terminals 13 of the first battery cell 10a and the electrode terminals 13 of the second battery cell 10b are disposed proximal to the sampling member 22; the first electrode terminal 131 of the first battery cell 10a is disposed opposite to the first electrode terminal 131 of the second battery cell 10b, and the second electrode terminal 132 of the second battery cell 10b is disposed opposite to the second electrode terminal 132 of the second battery cell 10b.

In the case where the first side wall 1111 is provided with a pressure relief mechanism 12, the first electrode terminal 131 and the second electrode terminal 132 of the first battery cell 10a are located between the sampling member 22 and the pressure relief mechanism 12 of the first battery cell 10a, and the first electrode terminal 131 and the second electrode terminal 132 of the second battery cell 10b are located between the sampling member 22 and the pressure relief mechanism 12 of the second battery cell 10b; the first electrode terminal 131 of the first battery cell 10a and the first electrode terminal 131 of the second battery cell 10b are arranged along the second direction, and the second electrode terminal 132 of the first battery cell 10a and the second battery 1100 terminal of the second battery cell 10b are arranged along the second direction.

By adopting the technical solution of the embodiments, the electrode terminals 13 of the battery cells 10 are arranged in a regular manner, which facilitates the mounting of the electric connector 21.

In some other embodiments of the present application, referring to FIGs. 3 and 7, the polarity of the first electrode terminal 131 of the first battery cell 10a is the same as the polarity of the first electrode terminal 131 of the second battery cell 10b.

It can be understood that the polarity of the second electrode terminal 132 of the first battery cell 10a is the same as the polarity of the second electrode terminal 132 of the second battery cell 10b.

Exemplarily, the first electrode terminal 131 of the first battery cell 10a is a positive electrode terminal, and the second electrode terminal 132 of the first battery cell 10a is a negative electrode terminal; the first electrode terminal 131 of the second battery cell 10b is a positive electrode terminal, and the second electrode terminal 132 of the second battery cell 10b is a negative electrode terminal.

Exemplarily, the first electrode terminal 131 of the first battery cell 10a is a negative electrode terminal, and the second electrode terminal 132 of the first battery cell 10a is a positive electrode terminal; the first electrode terminal 131 of the second battery cell 10b is a negative electrode terminal, and the second electrode terminal 132 of the second battery cell 10b is a positive electrode terminal.

By adopting the technical solution of the embodiments, the polarity of the first electrode terminal 131 of the first battery cell 10a is the same as the polarity of the first electrode terminal 131 of the second battery cell 10b, which can facilitate the use of the same type of battery cells 10 for the first battery cell 10a and the second battery cell 10b and reduce the manufacturing cost of the battery 1100.

In some other embodiments of the present application, referring to FIG. 9, the polarity of the first electrode terminal 131 of the first battery cell 10a is different from the polarity of the first electrode terminal 131 of the second battery cell 10b.

It can be understood that the polarity of the second electrode terminal 132 of the first battery cell 10a is different from the polarity of the second electrode terminal 132 of the second battery cell 10b.

Exemplarily, the first electrode terminal 131 of the first battery cell 10a is a positive electrode terminal, and the second electrode terminal 132 of the first battery cell 10a is a negative electrode terminal; the first electrode terminal 131 of the second battery cell 10b is a negative electrode terminal, and the second electrode terminal 132 of the second battery cell 10b is a positive electrode terminal.

Exemplarily, the first electrode terminal 131 of the first battery cell 10a is a negative electrode terminal, and the second electrode terminal 132 of the first battery cell 10a is a positive electrode terminal; the first electrode terminal 131 of the second battery cell 10b is a positive electrode terminal, and the second electrode terminal 132 of the second battery cell 10b is a negative electrode terminal.

By adopting the technical solution of the embodiments, the polarity of the first electrode terminal 131 of the first battery cell 10a is different from the polarity of the first electrode terminal 131 of the second battery cell 10b, which can facilitate the electrical connection between the electrode terminal 13 and the electric connector 21 and reduce the manufacturing cost of the battery 1100.

In some other embodiments of the present application, referring to FIGs. 9 and 10, the first side wall 1111 is provided with a first side edge 11111 and a second side edge 11112 spaced apart from each other along the first direction, and the first electrode terminal 131 is located between the second electrode terminal 132 and the first side edge 11111; the spacing between the first side edge 11111 and the second side edge 11112 is L, and the distance between the second electrode terminal 132 and the first side edge 11111 is L₁, where 0.2 ≤ L₁/L ≤ 0.5.

The spacing L between the first side edge 11111 and the second side edge 11112 may refer to the dimension of the first side wall 1111 in the first direction, that is, the length of the battery cell 10, which is also equal to the distance L₆ between the bisector A and the first side edge 11111 plus the distance L₇ between the bisector A and the second side edge 11112; the distance L₁ between the second electrode terminal 132 and the first side edge 11111 may refer to the spacing between a side surface, proximal to the first electrode terminal 131, of the second electrode terminal 132 and the first side edge 11111.

0.2 ≤ L₁/L ≤ 0.5. It can be understood that L₁/L ≤ 0.5 causes the first electrode terminal 131 and the second electrode terminal 132 to deviate from the middle position of the first side wall 1111 in the first direction. In this way, in the case where the first side edge 11111 is disposed proximal to the sampling member 22, the spacing between the second electrode terminal 132 and the sampling member 22 can be reduced, which is beneficial to reducing the sampling distance. L₁/L ≥ 0.2 enables a certain space to exist between the second electrode terminal 132 and the first side edge 11111, and the space can allow the first electrode terminal 131 and the second electrode terminal 132 to be mounted spaced apart, thereby reducing the risk of short circuits, and can also allow the positive electrode tab and the negative electrode tab to have a certain clearance, thereby reducing the risk of short circuits.

By adopting the technical solution of the embodiments, it is beneficial to reducing the sampling distance, and the risk of short circuits of the battery cell 10 can also be reduced.

In some other embodiments of the present application, referring to FIGs. 9 and 10, 0.35 ≤ L₁/L ≤ 0.45.

0.35 ≤ L₁/L ≤ 0.45. It can be understood that L₁/L ≤ 0.45 causes the first electrode terminal 131 and the second electrode terminal 132 to be disposed on a side portion, proximal to the first side edge 11111, of the first side wall 1111. In this way, in the case where the first side edge 11111 is disposed proximal to the sampling member 22, the spacing between the second electrode terminal 132 and the sampling member 22 can be better reduced, which is beneficial to reducing the sampling distance. L₁/L ≥ 0.35 enables a large space to exist between the second electrode terminal 132 and the first side edge 11111, and the space can allow the first electrode terminal 131 and the second electrode terminal 132 to be mounted spaced apart; additionally, the spacing distance between the first electrode terminal 131 and the second electrode terminal 132 is large, which can better reduce the risk of short circuits, and the space can also allow the positive electrode tab and the negative electrode tab to have a large clearance, thereby better reducing the risk of short circuits.

By adopting the technical solution of the embodiments, the sampling distance can be better reduced, and the risk of short circuits of the battery cell 10 can also be better reduced.

In some embodiments, the value of L₁/L may be 0.2, 0.5, or any value between 0.2 and 0.5. Exemplarily, the value of L₁/L may be, but is not limited to, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, or 0.5.

In some other embodiments of the present application, referring to FIGs. 11 and 12, the pressure relief mechanism 12 is disposed on the first side wall 1111, and the second electrode terminal 132 is located between the first electrode terminal 131 and the pressure relief mechanism 12; the first side wall 1111 is provided with a first side edge 11111 and a second side edge 11112 spaced apart from each other along the first direction, and the first electrode terminal 131 is located between the second electrode terminal 132 and the first side edge 11111; the spacing between the first side edge 11111 and the second side edge 11112 is L, and the distance between the second electrode terminal 132 and the pressure relief mechanism 12 is L₂, where 0.5 ≤ L₂/L ≤ 2/3.

The distance L₂ between the second electrode terminal 132 and the pressure relief mechanism 12 may refer to the spacing between a side surface, proximal to the second side edge 11112, of the second electrode terminal 132 and the pressure relief mechanism 12.

0.5 ≤ L₂/L ≤ 2/3. It can be understood that L₂/L ≥ 0.5 causes the distance between the second electrode terminal 132 and the pressure relief mechanism 12 to be greater than or equal to half of the dimension of the first side wall 1111 in the first direction; the distance between the second electrode terminal 132 and the pressure relief mechanism 12 is long, and the distance between the first electrode terminal 131 and the pressure relief mechanism 12 is even longer, such that when the pressure relief mechanism 12 opens, the ejected particulate matter is unlikely to move between the electric connector 21 and the first side wall 1111, thereby reducing the risk of electrical bridging and conduction between the electric connector 21 and the first side wall 1111 due to the particulate matter. L₂/L ≤ 2/3 enables a certain space to exist between the second electrode terminal 132 and the first side edge 11111, and the space can allow the first electrode terminal 131 and the second electrode terminal 132 to be mounted spaced apart, thereby reducing the risk of short circuits, and can also allow the positive electrode tab and the negative electrode tab to have a certain clearance, thereby reducing the risk of short circuits.

By adopting the technical solution of the embodiments, the risk of electrical bridging and conduction between the electric connector 21 and the first side wall 1111 can be reduced, and the risk of short circuits of the battery cell 10 can also be reduced, which is beneficial to improving the use reliability of the battery 1100.

In some other embodiments of the present application, referring to FIGs. 11 and 12, 0.55 ≤ L₂/L ≤ 0.65.

0.55 ≤ L₂/L ≤ 0.65. It can be understood that L₂/L ≥ 0.55 causes the distance between the second electrode terminal 132 and the pressure relief mechanism 12 to be greater than half of the dimension of the first side wall 1111 in the first direction; the distance between the second electrode terminal 132 and the pressure relief mechanism 12 is long, and the distance between the first electrode terminal 131 and the pressure relief mechanism 12 is even longer, such that when the pressure relief mechanism 12 opens, the ejected particulate matter is less likely to move between the electric connector 21 and the first side wall 1111, thereby better reducing the risk of electrical bridging and conduction between the electric connector 21 and the first side wall 1111 due to the particulate matter. L₂/L ≤ 0.65 enables a large space to exist between the second electrode terminal 132 and the first side edge 11111, and the space can allow the first electrode terminal 131 and the second electrode terminal 132 to be mounted spaced apart; additionally, the spacing distance between the first electrode terminal 131 and the second electrode terminal 132 is large, which can better reduce the risk of short circuits, and the space can also allow the positive electrode tab and the negative electrode tab to have a large clearance, thereby better reducing the risk of short circuits.

By adopting the technical solution of the embodiments, the risk of electrical bridging and conduction between the electric connector 21 and the first side wall 1111 can be better reduced, and the risk of short circuits of the battery cell 10 can also be better reduced, which is beneficial to improving the use reliability of the battery 1100.

In some embodiments, the value of L₂/L may be 0.5, 2/3, or any value between 0.5 and 2/3. Exemplarily, the value of L₂/L may be, but is not limited to, 0.5, 0.51, 0.52, 0.53, 0.54, 0.55, 0.56, 0.57, 0.58, 0.59, 0.6, 0.61, 0.62, 0.63, 0.64, 0.65, 0.66, or 2/3.

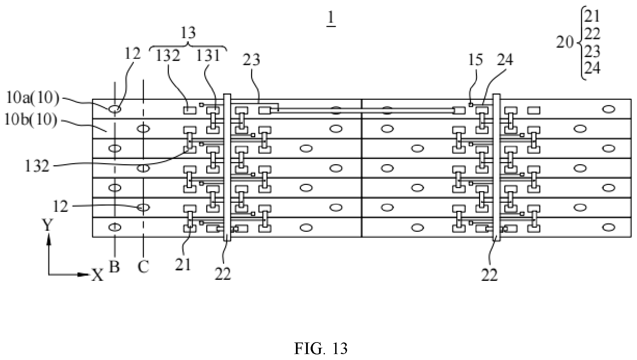

In some other embodiments of the present application, referring to FIG. 13, the pressure relief mechanism 12 is disposed on the first side wall 1111, and the second electrode terminal 132 is located between the first electrode terminal 131 and the pressure relief mechanism 12. In the same column of battery cells 10, pressure relief mechanisms 12 of the battery cells 10 are disposed in a staggered manner.

In the case where the pressure relief mechanism 12 is disposed on the first side wall 1111 and the second electrode terminal 132 is located between the first electrode terminal 131 and the pressure relief mechanism 12, in the same column of battery cells 10, the pressure relief mechanisms 12 of the battery cells 10 are not located on the same straight line parallel to the second direction, where the pressure relief mechanisms 12 of the battery cells 10 may be arranged along a straight line inclined relative to the sampling member 22, or may be arranged along a broken line.

Exemplarily, the pressure relief mechanisms 12 of the first battery cells 10a are arranged along a first straight line B, and the pressure relief mechanisms 12 of the second battery cells 10b are arranged along a second straight line C; the first straight line B and the second straight line C are spaced apart from each other, and the first straight line B and the second straight line C are both parallel to the second direction. In this arrangement, the structure of the battery cells 10 is simple, and the operation of grouping the battery cells 10 to form a battery unit 1 is simple.

By adopting the technical solution of the embodiments, the pressure relief mechanisms 12 are disposed in a staggered manner, and the spacing between the pressure relief mechanisms 12 of two adjacent battery cells 10 can be increased. In this way, it can reduce the impact of high-temperature shock and ejected particulate matter after the pressure relief mechanism 12 is opened on the pressure relief mechanisms 12 of adjacent battery cells 10, and reduce the risk of melting through the pressure relief mechanisms 12 of the adjacent battery cells 10, which is beneficial to improving the use reliability of the battery cells 10.

In some other embodiments of the present application, referring to FIG. 3, the plurality of battery cells 10 are connected in series by the electric connector 21.

It can be understood that the two electrode terminals 13 of two adjacent battery cells 10 with different polarities are respectively electrically connected to the two ends of the electric connector 21, which is a simple connection method.

Exemplarily, referring to FIG. 7, in the same column of battery cells 10, the first electrode terminal 131 of the first battery cell 10a is disposed opposite to the second electrode terminal 132 of the second battery cell 10b, and the second electrode terminal 132 of the first battery cell 10a is disposed opposite to the first electrode terminal 131 of the second battery cell 10b; the polarity of first electrode terminal 131 of the first battery cell 10a is the same as the polarity of the first electrode terminal 131 of the second battery cell 10b. In this way, the electric connector 21 can be arranged parallel to the second direction, such that the first battery cell 10a and the second battery cell 10b are connected in series, and the arrangement of the electric connector 21 is regular and simple, which is beneficial to improving the production efficiency and reducing the risk of short circuits.

Exemplarily, referring to FIG. 9, in the same column of battery cells 10, the first electrode terminal 131 of the first battery cell 10a is disposed opposite to the first electrode terminal 131 of the second battery cell 10b, and the second electrode terminal 132 of the first battery cell 10a is disposed opposite to the second electrode terminal 132 of the second battery cell 10b; the polarity of the first electrode terminal 131 of the first battery cell 10a is different from the polarity of the first electrode terminal 131 of the second battery cell 10b. In this way, the electric connector 21 can be arranged parallel to the second direction, such that the first battery cell 10a and the second battery cell 10b are connected in series, and the arrangement of the electric connector 21 is regular and simple, which is beneficial to improving the production efficiency and reducing the risk of short circuits.

By adopting the technical solution of the embodiments, the battery cells 10 are connected in series, and the electrical connection operation between the battery cells 10 is simple, which is beneficial to reducing the manufacturing cost of the battery cells 10.

In some other embodiments of the present application, referring to FIG. 3, the sampling member 22 extends in the second direction.

It can be understood that the sampling member 22 is in a long strip shape, and the sampling member 22 is disposed parallel to the second direction.

By adopting the technical solution of the embodiments, the sampling member 22 and the battery cells 10 in two adjacent columns of battery cells 10 may be correspondingly disposed, which is beneficial to reducing the connection distance between the electric connector 21 and the sampling member 22.

In some other embodiments of the present application, referring to FIG. 3, the sampling member 22 includes at least one of a flexible printed circuit and a rigid printed circuit board.

It can be understood that the sampling member 22 may be a flexible printed circuit, and the flexible printed circuit is flexible and bendable and has better adaptability to the battery cells 10; the sampling member 22 may be a rigid printed circuit board, and the rigid printed circuit board has good structural strength, is not easily damaged, and is beneficial to improving the reliability of sampling. The sampling member 22 includes a flexible printed circuit and a rigid printed circuit board, and the flexible printed circuit and the rigid printed circuit board can be reasonably selected according to the actual situation, such that the arrangement of the sampling member 22 is more flexible, with better practicability.

By adopting the technical solution of the embodiments, different types of sampling members 22 may be selected according to the actual situation, such that the arrangement of the sampling members 22 is more flexible, with better practicability.

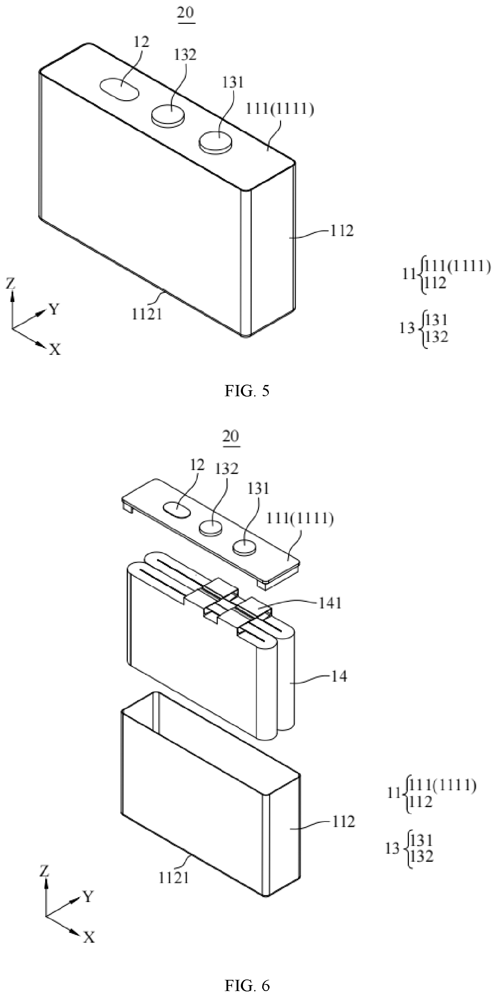

In some other embodiments of the present application, referring to FIGs. 5 and 6, the battery cell 10 is provided with a second side wall 1121 disposed opposite to the first side wall 1111, and the second side wall 1121 is provided with the pressure relief mechanism 12.

It can be understood that one of two opposite side walls of the battery cell 10 in the third direction is a first side wall 1111, and the other is a second side wall 1121; the second side wall 1121 is provided with the pressure relief mechanism 12.

Exemplarily, for the battery cell 10, the situation may be that only the second side wall 1121 is provided with the pressure relief mechanism 12, or both the first side wall 1111 and the second side wall 1121 are provided with the pressure relief mechanism 12, or the second side wall 1121 is provided with the pressure relief mechanism 12 while the first side wall 1111 is not provided with the pressure relief mechanism 12, and other side walls except the first side wall 1111 and the second side wall 1121 are also provided with the pressure relief mechanism 12.

By adopting the technical solution of the embodiments, the pressure relief mechanism 12 is disposed on the second side wall 1121, such that when the pressure relief mechanism 12 on the second side wall 1121 opens, the ejected particulate matter is unlikely to come into contact with the electric connector 21, the electrode terminal 13, and the sampling member 22, thereby reducing the risk of damage to the electric connector 21, the electrode terminal 13, and the sampling member 22, which is beneficial to improving the use reliability of the battery 1100.

In some other embodiments of the present application, referring to FIG. 3, the battery cell 10 is provided with a temperature sensor 15 for acquiring temperature information, and the temperature sensor 15 is electrically connected to the sampling member 22.

The temperature sensor 15 may refer to a component capable of acquiring temperature information, and the temperature sampling member 22 may be, but is not limited to, a thermistor, a thermocouple, or a semiconductor sensor. The temperature sensor 15 is electrically connected to the sampling member 22. It can be understood that the temperature sensor 15 can transmit a temperature signal to the sampling member 22, and the sampling member 22 can feed back the acquired temperature signal to the battery management module 4, so as to monitor the working state of the battery 1100 and take necessary measures, such as controlling the charging and discharging rate, and preventing overheating.

The temperature sensor 15 and the sampling member 22 may be electrically connected by a second conductive component 24, where the second conductive component 24 may be, but is not limited to, a wire or a conductive sheet.

By adopting the technical solution of the embodiments, the sampling member 22 cooperates with the temperature sensor 15, and a temperature signal of the battery cell 10 can also be acquired, such that the operation state of the battery cell 10 is monitored more comprehensively, which is beneficial to improving the use reliability of the battery 1100.

In some other embodiments of the present application, referring to FIGs. 5 and 6, a battery cell 10 is provided. The battery cell 10 includes a housing 11 and an electrode terminal 13. The housing 11 is provided with a first side wall 1111, and the first side wall 1111 is provided with a pressure relief mechanism 12, as well as a first electrode terminal 131 and a second electrode terminal 132 with different polarities; the second electrode terminal 132 is located between the first electrode terminal 131 and the pressure relief mechanism 12. The electrode assembly 14 is located in the housing 11, and the first electrode terminal 131 and the second electrode terminal 132 are electrically connected to the electrode assembly 14 to realize the input and output of electric energy.

In the battery cell 10 of the embodiments of the present application, the second electrode terminal 132 is located between the pressure relief mechanism 12 and the first electrode terminal 131, such that the spacing between the first electrode terminal 131 and the second electrode terminal 132 can be set to be small to facilitate the sharing of one sampling member 22 by two adjacent columns of battery cells 10, thereby reducing the manufacturing cost of the battery 1100.

In some embodiments, the housing 11 includes an end cover 111 and a housing body 112.

The end cover 111 refers to a component that covers and engages with the opening of the housing body 112 to isolate the internal environment of the battery cell 10 from the external environment. Without limitation, the shape of the end cover 111 may be adapted to the shape of the housing body 112 to match the housing body 112. Optionally, the end cover 111 may be made of a material with a certain hardness and strength (for example, an aluminum alloy), such that the end cover 111 is not prone to deformation when being squeezed or collided, thereby enabling the battery cell 10 to have higher structural strength and improved safety performance. The end cover 111 may also be made of a variety of materials, such as copper, iron, aluminum, stainless steel, aluminum alloy, and plastic, which is not specifically limited in the embodiments of the present application. In some embodiments, the inner side of the end cover 111 may also be provided with an insulating member, and the insulating member may be configured to isolate an electrical connection component in the housing body 112 from the end cover 111 to reduce the risk of short circuits. Exemplarily, the insulating member may be made of plastic, rubber, or the like.

The housing body 112 is an assembly configured to form the internal environment of the battery cell 10 in combination with the end cover 111. The formed internal environment may be used to accommodate the electrode assembly 14, the electrolyte, and other components. The housing body 112 and the end cover 111 may be independent components. An opening may be formed in the housing body 112, and at the opening, the end cover 111 covers and engages with the opening to form the internal environment of the battery cell 10. Without limitation, the end cover 111 and the housing body 112 may be integrated. Specifically, the end cover 111 and the housing body 112 may form a common connecting surface before other components are placed into the housing, and when the interior of the housing body 112 needs to be sealed, the end cover 111 is then caused to cover and engage with the housing body 112. The housing body 112 may be in various shapes and dimensions, such as a rectangular parallelepiped, a cylinder, or a hexagonal prism. Specifically, the shape of the housing body 112 may be determined according to the specific shape and dimension of the electrode assembly 14. The housing body 112 may be made of various materials, such as copper, iron, aluminum, stainless steel, aluminum alloy, and plastic, which is not specially limited in the embodiments of the present application.

In some embodiments, the end cover 111 is the first side wall 1111, and the side wall, opposite to the end cover 111, of the housing body 112 is the second side wall 1121; or one of the two opposite side walls of the housing body 112 is the first side wall 1111, and the other side wall is the second side wall 1121.

The battery 1100 according to the embodiments of the present application is described below in combination with some specific embodiments.

### Embodiment 1

With reference to FIGs. 3 to 6, in this embodiment, the battery 1100 includes a battery unit 1 and a sampling assembly 2. The battery unit 1 includes a plurality of columns of battery cells 10 arranged along a first direction, and each column of battery cells 10 includes a plurality of battery cells 10 arranged along a second direction; the battery cell 10 is provided with a pressure relief mechanism 12, electrode terminals 13, and a first side wall 1111 in a third direction, and the electrode terminals 13 include a first electrode terminal 131 and a second electrode terminal 132 with different polarities; the first electrode terminal 131, the second electrode terminal 132, and the pressure relief mechanism 12 are spaced apart from each other on the first side wall 1111 along the first direction, and the second electrode terminal 132 is located between the first electrode terminal 131 and the pressure relief mechanism 12; or the first electrode terminal 131 and the second electrode terminal 132 are spaced apart from each other on the first side wall 1111 along the first direction, and the pressure relief mechanism 12 is disposed on another side wall of the battery cell 10, where the first direction intersects with the second direction, and the third direction is perpendicular to the first direction and the second direction. The sampling assembly 2 includes an electric connector 21 and a sampling member 22 configured to be electrically connected to the electric connector 21; the electrode terminals 13 of two adjacent battery cells 10 are connected by the electric connector 21, and the sampling member 22 is disposed between the electrode terminals 13 of every two adjacent columns of battery cells 10.

In this embodiment, in the same column of battery cells 10, two adjacent battery cells 10 are respectively a first battery cell 10a and a second battery cell 10b; the second electrode terminal 132 of the first battery cell 10a is disposed opposite to the second electrode terminal 132 of the second battery cell 10b, the first electrode terminal 131 of the first battery cell 10a is located on one side of the second electrode terminal 132 of the first battery cell 10a, and the first electrode terminal 131 of the second battery cell 10b is located on the other side of the second electrode terminal 132 of the first battery cell 10a.

In this embodiment, an end portion, close to the sampling member 22, of the electric connector 21 is connected to the sampling member 22.

In this embodiment, the second electrode terminal 132 is located at a middle position of the first side wall 1111 in the first direction.

In this embodiment, the polarity of the first electrode terminal 131 of the first battery cell 10a is the same as the polarity of the first electrode terminal 131 of the second battery cell 10b.

In this embodiment, the plurality of battery cells 10 are connected in series by the electric connector 21.

In this embodiment, the sampling member 22 extends in the second direction.

In this embodiment, the sampling member 22 includes a flexible printed circuit.

In this embodiment, the battery cell 10 is provided with a temperature sensor 15 for acquiring temperature information, and the temperature sensor 15 is connected to the sampling member 22.

In this embodiment, the battery cell 10 includes a housing 11 and an electrode assembly 14. The housing 11 is provided with a first side wall 1111, and the first side wall 1111 is provided with a pressure relief mechanism 12, as well as a first electrode terminal 131 and a second electrode terminal 132 with different polarities; the second electrode terminal 132 is located between the first electrode terminal 131 and the pressure relief mechanism 12. The electrode assembly 14 is located in the housing 11, and the first electrode terminal 131 and the second electrode terminal 132 are electrically connected to the electrode assembly 14 to realize the input and output of electric energy.

In this embodiment, the housing 11 includes an end cover 111 and a housing body 112. The end cover 111 covers and engages with an opening of the housing body 112, and the end cover 111 forms the first side wall 1111; a side wall, opposite to the end cover 111, of the housing body 112 forms a second side wall 1121.

### Embodiment 2

This embodiment differs from Embodiment 2 in that: referring to FIGs. 7 and 8, in the same column of battery cells 10, two adjacent battery cells 10 are respectively a first battery cell 10a and a second battery cell 10b; the first electrode terminal 131 of the first battery cell 10a is disposed opposite to the second electrode terminal 132 of the second battery cell 10b, and the second electrode terminal 132 of the first battery cell 10a is disposed opposite to the first electrode terminal 131 of the second battery cell 10b.

In this embodiment, the first electrode terminal 131 and the second electrode terminal 132 are symmetrically disposed with respect to the bisector A of the first side wall 1111 in the first direction.

### Embodiment 3

This embodiment differs from Embodiment 1 in that: referring to FIGs. 9 and 10, in the same column of battery cells 10, two adjacent battery cells 10 are respectively a first battery cell 10a and a second battery cell 10b, and the electrode terminals 13 of the first battery cell 10a and the electrode terminals 13 of the second battery cell 10b are disposed proximal to the sampling member 22; the first electrode terminal 131 of the first battery cell 10a is disposed opposite to the first electrode terminal 131 of the second battery cell 10b, and the second electrode terminal 132 of the second battery cell 10b is disposed opposite to the second electrode terminal 132 of the second battery cell 10b.

In this embodiment, the polarity of the first electrode terminal 131 of the first battery cell 10a is different from the polarity of the first electrode terminal 131 of the second battery cell 10b.

In this embodiment, the first side wall 1111 is provided with a first side edge 11111 and a second side edge 11112 spaced apart from each other along the first direction, and the first electrode terminal 131 is located between the second electrode terminal 132 and the first side edge 11111; the spacing between the first side edge 11111 and the second side edge 11112 is L, and the distance between the second electrode terminal 132 and the first side edge 11111 is L₁, where 0.2 ≤ L₁/L ≤ 0.5.

In this embodiment, 0.35 ≤ L₁/L ≤ 0.45.

### Embodiment 4

This embodiment differs from Embodiment 3 in that: referring to FIGs. 11 and 12, the pressure relief mechanism 12 is disposed on the first side wall 1111, and the second electrode terminal 132 is located between the first electrode terminal 131 and the pressure relief mechanism 12; the first side wall 1111 is provided with a first side edge 11111 and a second side edge 11112 spaced apart from each other along the first direction, and the first electrode terminal 131 is located between the second electrode terminal 132 and the first side edge 11111; the spacing between the first side edge 11111 and the second side edge 11112 is L, and the distance between the second electrode terminal 132 and the pressure relief mechanism 12 is L₂, where 0.5 ≤ L₂/L ≤ 2/3.

In this embodiment, 0.55 ≤ L₂/L ≤ 0.65.

### Embodiment 5

This embodiment differs from Embodiment 3 in that: referring to FIG. 13, the pressure relief mechanism 12 is disposed on the first side wall 1111, and the second electrode terminal 132 is located between the first electrode terminal 131 and the pressure relief mechanism 12. In the same column of battery cells 10, the pressure relief mechanisms 12 of the battery cells 10 are disposed in a staggered manner.

In some other embodiments of the present application, referring to FIG. 1, an electric device includes the battery 1100 as described in the above embodiments and/or the battery cell 10 as described in the above embodiments.

It can be understood that the electric device includes the battery 1100 as described in the above embodiments or the battery cell 10 as described in the above embodiments; or the electric device includes the battery 1100 as described in the above embodiments and the battery cell 10 as described in the above embodiments.

The above description of the various embodiments tends to emphasize the differences among the various embodiments, and reference may be made to each other for the identical or similar parts. For brevity, details are not described herein again.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery, comprising:
a battery unit, comprising a plurality of columns of battery cells arranged along a first direction, each column of battery cells comprising a plurality of battery cells arranged along a second direction, wherein
the battery cell is provided with a pressure relief mechanism, electrode terminals, and a first side wall in a third direction, and the electrode terminals comprise a first electrode terminal and a second electrode terminal with different polarities; the first electrode terminal, the second electrode terminal, and the pressure relief mechanism are spaced apart from each other on the first side wall along the first direction, and the second electrode terminal is located between the first electrode terminal and the pressure relief mechanism; or the first electrode terminal and the second electrode terminal are spaced apart from each other on the first side wall along the first direction, and the pressure relief mechanism is disposed on another side wall of the battery cell, wherein the first direction intersects with the second direction, and the third direction is perpendicular to the first direction and the second direction; and
a sampling assembly, comprising an electric connector and a sampling member configured to be electrically connected to the electric connector, wherein the electrode terminals of two adjacent battery cells are connected by the electric connector, and the sampling member is disposed between the electrode terminals of every two adjacent columns of battery cells.

2. The battery according to claim 1, wherein in a same column of the battery cells, two adjacent battery cells are respectively a first battery cell and a second battery cell; the second electrode terminal of the first battery cell is disposed opposite to the second electrode terminal of the second battery cell, the first electrode terminal of the first battery cell is located on one side of the second electrode terminal of the first battery cell, and the first electrode terminal of the second battery cell is located on the other side of the second electrode terminal of the first battery cell.

3. The battery according to claim 2, wherein an end portion, proximal to the sampling member, of the electric connector is connected to the sampling member.

4. The battery according to claim 2 or 3, wherein the second electrode terminal is located at a middle position of the first side wall in the first direction.

5. The battery according to claim 1, wherein in a same column of the battery cells, two adjacent battery cells are respectively a first battery cell and a second battery cell; the first electrode terminal of the first battery cell is disposed opposite to the second electrode terminal of the second battery cell, and the second electrode terminal of the first battery cell is disposed opposite to the first electrode terminal of the second battery cell.

6. The battery according to claim 5, wherein the first electrode terminal and the second electrode terminal are symmetrically disposed with respect to a bisector of the first side wall in the first direction.

7. The battery according to claim 1, wherein in a same column of the battery cells, two adjacent battery cells are respectively a first battery cell and a second battery cell, and the electrode terminals of the first battery cell and the electrode terminals of the second battery cell are disposed proximal to the sampling member; the first electrode terminal of the first battery cell is disposed opposite to the first electrode terminal of the second battery cell, and the second electrode terminal of the second battery cell is disposed opposite to the second electrode terminal of the second battery cell.

8. The battery according to any one of claims 2 to 7, wherein the polarity of the first electrode terminal of the first battery cell is the same as the polarity of the first electrode terminal of the second battery cell; or the polarity of the first electrode terminal of the first battery cell is different from the polarity of the first electrode terminal of the second battery cell.

9. The battery according to any one of claims 1 to 8, wherein the first side wall is provided with a first side edge and a second side edge spaced apart from each other along the first direction, and the first electrode terminal is located between the second electrode terminal and the first side edge; a spacing between the first side edge and the second side edge is L, and a distance between the second electrode terminal and the first side edge is L₁, wherein 0.2 ≤ L₁/L ≤ 0.5.

10. The battery according to claim 9, wherein 0.35 ≤ L₁/L ≤ 0.45.

11. The battery according to any one of claims 1 to 10, wherein the pressure relief mechanism is disposed on the first side wall, and the second electrode terminal is located between the first electrode terminal and the pressure relief mechanism; the first side wall is provided with a first side edge and a second side edge spaced apart from each other along the first direction, and the first electrode terminal is located between the second electrode terminal and the first side edge; a spacing between the first side edge and the second side edge is L, and a distance between the second electrode terminal and the pressure relief mechanism is L₂, wherein 0.5 ≤ L₂/L ≤ 2/3.

12. The battery according to claim 11, wherein 0.55 ≤ L₂/L ≤ 0.65.

13. The battery according to any one of claims 1 to 12, wherein the pressure relief mechanism is disposed on the first side wall, and the second electrode terminal is located between the first electrode terminal and the pressure relief mechanism; in a same column of battery cells, the pressure relief mechanisms of the battery cells are disposed in a staggered manner.

14. The battery according to any one of claims 1 to 13, wherein the plurality of battery cells are connected in series by the electric connector.

15. The battery according to any one of claims 1 to 14, wherein the sampling member extends in the second direction.

16. The battery according to any one of claims 1 to 15, wherein the sampling member comprises at least one of a flexible printed circuit and a rigid printed circuit board.

17. The battery according to any one of claims 1 to 16, wherein the battery cell is provided with a second side wall disposed opposite to the first side wall, and the second side wall is provided with the pressure relief mechanism.

18. The battery according to any one of claims 1 to 17, wherein the battery cell is provided with a temperature sensor for acquiring temperature information, and the temperature sensor is connected to the sampling member.

19. A battery cell, comprising:
a housing provided with a first side wall, wherein the first side wall is provided with a pressure relief mechanism, as well as a first electrode terminal and a second electrode terminal with different polarities, and the second electrode terminal is located between the first electrode terminal and the pressure relief mechanism; and
an electrode assembly located in the housing, wherein the first electrode terminal and the second electrode terminal are electrically connected to the electrode assembly to realize input and output of electric energy.

20. An electric device, wherein the electric device comprises the battery according to any one of claims 1 to 18 and/or the battery cell according to claim 19.
